# EUROPÄISCHE PATENTSCHRIFT

(11) **EP 3 699 416 B1**
(45) Veröffentlichungstag und Bekanntmachung des Hinweises auf die Patenterteilung: **09.04.2025**
(21) Anmeldenummer: 20157934.9
(22) Anmeldetag: 18.02.2020
(51) Int. Cl.: F02D 9/10, F16K 1/22, F02D 9/04, F02D 9/02

(54) **KLAPPENEINRICHTUNG**
FLAP DEVICE
DISPOSITIF FORMANT CLAPET

(30) Priorität: 18.02.2019 DE 102019104018
(43) Veröffentlichungstag der Anmeldung: 26.08.2020
(73) Patentinhaber: Friedrich Boysen GmbH & Co. KG, 72213 Altensteig (DE)
(72) Erfinder: Winter, Hayri, 75387 Neubulach (DE); Roller, Volker, 72226 Simmersfeld (DE); Stockinger, Karl, 72224 Ebhausen (DE)
(74) Vertreter: Manitz Finsterwald Patent- und Rechtsanwaltspartnerschaft mbB

(56) Entgegenhaltungen:
- CN-U- 202 431 374
- DE-A1- 102009 013 815
- DE-A1- 102015 221 953
- JP-A- H02 256 837
- US-A1- 2008 011 269

## Beschreibung

Die vorliegende Erfindung betrifft eine Klappeneinrichtung zur Steuerung eines Gasstroms durch eine Rohrleitung, insbesondere Abgasklappeneinrichtung für einen Abgasstrang eines Kraftfahrzeugs, mit zumindest einer Klappe, die in einem, insbesondere rohrförmigen, Klappengehäuse um eine Drehachse einer Klappenwelle zwischen einer Offenstellung und einer Geschlossenstellung durch eine Antriebseinheit verdrehbar angeordnet ist.

Eine derartige Klappeneinrichtung ist grundsätzlich bekannt und wird beispielsweise in einem Abgasstrang eines Kraftfahrzeugs dazu verwendet, einen Abgasstrom von einer Brennkraftmaschine mittels einer in einem Klappengehäuse angeordneten Klappe durch ihre Verdrehung zwischen einer Offenstellung und einer Geschlossenstellung zu beeinflussen, sogenannte Abgasklappe. Zu diesem Zweck ist die Klappe um eine Drehachse einer Klappenwelle in mindestens einem Lager verdrehbar gelagert.

Während des Betriebs ist die Klappeneinrichtung großen Temperaturschwankungen ausgesetzt, welche üblicherweise von -40°C bis 1000°C reichen. Damit die Klappenwelle bedingt durch ihre Wärmeausdehnung bei höheren Temperaturen nicht verkantet oder verklemmt, weist das Lager bei niedrigeren Temperaturen ein verhältnismäßig großes Lagerspiel auf, so dass sich die Klappenwelle bei niedrigeren Temperaturen in gewissem Maße bezüglich ihrer Lagerstelle bewegen kann.

Vibrationen und Druckpulsationen im Abgasstrom der Brennkraftmaschine können daher die Klappeneinrichtung, insbesondere die noch kalte Klappe und Klappenwelle, zu Schwingungen anregen, was üblicherweise mit einer unerwünschten Geräuschentwicklung einhergeht.

Zur Vermeidung von Schwingungen der Klappe kann die Klappenwelle mittels einer Feder beaufschlagt sein. Die CN 202 431 374 U offenbart eine Klappeneinrichtung, bei welcher eine Klappenwelle in einer vollständigen Offenstellung einer Klappe, nicht jedoch in deren Geschlossenstellung, mittels einer Feder beaufschlagt ist. Da Schwingungen vor allem in der Geschlossenstellung auftreten, kann bei einer derartigen Klappeneinrichtung eine durch die Schwingung hervorgerufene Geräuschentwicklung in der Geschlossenstellung der Klappe nicht unterbunden werden.

Die JP H02 256837 A lehrt ein Abgassteuersystem, bei welchem eine Feder eine Klappenwelle sowohl in einer Offenstellung als auch in der Geschlossenstellung einer Klappe mit einer Federkraft beaufschlagt. Da die Feder die Klappenwelle sowohl in der Offenstellung als auch in der Geschlossenstellung belastet, wird eine erhöhte Kraft zur Verdrehung der Klappe aus der Offenstellung in die Geschlossenstellung benötigt.

Eine Aufgabe der Erfindung besteht darin, eine unerwünschte Geräuschentwicklung zu vermeiden und gleichzeitig eine leichte Verdrehung der Klappe zu ermöglichen.

Diese Aufgabe wird mit einer Klappeneinrichtung mit den Merkmalen des Anspruchs 1 gelöst. Die erfindungsgemäße Klappeneinrichtung zeichnet sich durch ein Federmittel aus, welches bei einer Verdrehung der Klappe aus der Offenstellung in die Geschlossenstellung spätestens in der Geschlossenstellung der Klappe die Klappenwelle tangential und/oder radial elastisch belastet, wobei das Federmittel in Bezug auf eine Verdrehung um die Drehachse mit mindestens einem Abschnitt direkt oder indirekt drehfest mit dem Klappengehäuse verbunden ist und wobei das Federmittel in einer Offenstellung der Klappe und in einem daran anschließenden ersten Verdrehbereich die Klappenwelle nicht radial und/oder nicht tangential belastet.

Der Erfindung liegt der allgemeine Gedanke zugrunde, eine Schwingungsbewegung einer Klappe einer Klappeneinrichtung dadurch zu unterdrücken oder zumindest zu dämpfen, dass ein drehfest mit dem Klappengehäuse verbundenes Federmittel mit seiner Federkraft die Klappenwelle spätestens in ihrer Geschlossenstellung derart belastet, dass die Federkraft des Federmittels in Bezug auf die Drehachse der Klappenwelle in tangentialer und/oder radialer Richtung, insbesondere hin zu der Drehachse, wirkt. Mit anderen Worten ist die Klappenwelle spätestens in ihrer Geschlossenstellung spielfrei verspannt, wodurch sich die Klappenwelle und die daran vorgesehene Klappe nicht mehr oder allenfalls nur noch geringfügig bzw. gedämpft zum Schwingen anregen lassen. Hieraus ergibt sich der Vorteil, dass ein durch die Schwingung der Klappenwelle oder der Klappe hervorgerufenes Störgeräusch unterbunden oder zumindest verringert ist. Gleichzeitig ermöglicht die federelastische Ausgestaltung des Federmittels, dass sich das Federmittel bei einer Wärmeausdehnung der Klappe mitbewegen kann, so dass die Klappe in ihrer Geschlossenstellung sowohl im warmen als auch im kalten Zustand ohne die Gefahr eines Verklemmens spielfrei verspannt ist.

Vorteilhafte Ausbildungen der Erfindung sind den Unteransprüchen, der Beschreibung und den beigefügten Zeichnungen zu entnehmen.

In der Regel ist an gegenüberliegenden Seiten, insbesondere an Endabschnitten, der Klappenwelle an dem Klappengehäuse jeweils ein Lager zur Lagerung der Klappenwelle vorgesehen. Vorzugsweise ist das von der Antriebseinheit entfernte Lager ein Loslager und/oder ein Radiallager und/oder ein Axiallager. An dem Loslager und/oder dem Radiallager und/oder dem Axiallager kann ein erfindungsgemäßes Federmittel vorgesehen sein, welches bei einer Verdrehung der Klappe aus der Offenstellung in die Geschlossenstellung spätestens in der Geschlossenstellung der Klappe die Klappenwelle elastisch belastet. Das zu der Antriebseinheit benachbarte Lager kann ein Festlager und/oder ein Radiallager und/oder ein Axiallager sein. Ebenso kann auch andersherum das von der Antriebseinheit entfernte Lager ein Festlager und das zu der Antriebseinheit benachbarte Lager ein Loslager sein. Außerdem kann nicht nur das von der Antriebseinheit entfernte Lager, sondern auch das zu der Antriebseinheit benachbarte Lager ein erfindungsgemäßes Federmittel aufweisen.

Der Erfindung liegt außerdem der Gedanke zugrunde, dass das Federmittel erst in einer Zwischenstellung zwischen der vollständig geöffneten Offenstellung und der Geschlossenstellung, insbesondere kurz vor der Geschlossenstellung, mit der Klappenwelle in Eingriff gelangt, die Klappenwelle also in der vollständig geöffneten Offenstellung und in einem daran anschließenden ersten Verdrehbereich nicht belastet. Dies hat den Vorteil, dass die Klappenwelle weitgehend unbelastet verdreht werden kann. Da Schwingungen vor allem in der Geschlossenstellung auftreten, können diese trotzdem vermieden werden. In diesem Zusammenhang ist angemerkt, dass die Klappe insbesondere zu mindestens 90%, vorzugsweise zu mindestens 95% und besonders bevorzugt zu mindestens 99% aus der Offenstellung in Richtung der Geschlossenstellung verdreht ist, wenn das Federmittel die Klappenwelle belastet.

Eine besonders gute Unterbindung von Schwingungen lässt sich erreichen, wenn das Federmittel die Klappenwelle in radialer Richtung belastet. Vorzugsweise kann das Federmittel die Klappenwelle ausschließlich in radialer Richtung, d.h. nur in radialer Richtung, jedoch nicht in tangentialer Richtung belasten. Schwingungen in der Klappeneinrichtung lassen sich darüber hinaus noch besser unterbinden, wenn das Federmittel die Klappenwelle sowohl in radialer als auch in tangentialer Richtung belastet. Grundsätzlich ist aber auch eine ausreichende Unterbindung von Schwingungen möglich, wenn das Federmittel die Klappenwelle tangential belastet, insbesondere ausschließlich tangential belastet, d.h. Belastung der Klappenwelle durch das Federmittel nur in tangentialer Richtung, jedoch nicht in radialer Richtung.

Dabei kann die Belastung der Klappenwelle durch das Federmittel grundsätzlich , nicht erfindungsgemäß, bereits in einer Offenstellung der Klappe erfolgen. Erfindungsgemäß belastet das Federmittel die Klappenwelle in der vollständig geöffneten Offenstellung und in einem daran anschließenden ersten Verdrehbereich nicht radial und nicht tangential. Erfindungsgemäß belastet das Federmittel die Klappenwelle in der vollständig geöffneten Offenstellung und in einem daran anschließenden ersten Verdrehbereich also weder radial noch tangential.

Es ist aber auch, nicht erfindungsgemäß, möglich, dass das Federmittel die Klappenwelle in der vollständig geöffneten Offenstellung und in einem daran anschließenden ersten Verdrehbereich lediglich nicht radial belastet. Alternativ ist es auch, nicht erfindungsgemäß, möglich, dass das Federmittel die Klappenwelle in der vollständig geöffneten Offenstellung und in einem daran anschließenden ersten Verdrehbereich lediglich nicht tangential belastet. Insbesondere ist dabei eine radiale Belastung der Klappenwelle durch das Federmittel möglich, ohne die Klappenwelle in tangentialer Richtung zu belasten. Eine radiale Belastung der Klappenwelle durch das Federmittel ohne tangentiale Belastung der Klappenwelle hat zum Vorteil, dass Schwingungen effektiv unterbunden werden können, ohne jedoch die Klappenwelle und in Folge die Klappe durch tangential wirkende Kräfte zu verdrehen.

Gelangt das Federmittel mit der Klappenwelle bei einer Verdrehung der Klappe aus der Offenstellung in die Geschlossenstellung in Eingriff, so kann das Federmittel die Klappenwelle in tangentialer und/oder radialer Richtung in Bezug auf die Drehachse der Klappenwelle mit seiner Federkraft beaufschlagen. Hierdurch lässt sich eine effektive Dämpfung oder bestenfalls vollständige Unterdrückung von Schwingungen der Klappenwelle erreichen.

Somit ermöglicht der Eingriff von Federmittel und Klappenwelle eine sichere Unterdrückung einer Geräuschentwicklung infolge von insbesondere in der Geschlossenstellung auftretenden Schwingungen der Klappenwelle.

Für eine besonders gleichmäßige Belastung der Klappenwelle belastet das Federmittel die Klappenwelle in Bezug auf die Drehachse vorzugsweise achs-, spiegel- oder rotationssymmetrisch.

Eine weitere Verbesserung ergibt sich, wenn das Federmittel in Bezug auf die Drehachse axial vorgespannt ist.

Gemäß einer vorteilhaften Ausgestaltung der Klappeneinrichtung kann das Federmittel mindestens einen Federarm aufweisen, welcher bei einer Verdrehung der Klappe aus der Offenstellung in die Geschlossenstellung mit der Klappenwelle zusammenwirkt und welcher spätestens in der Geschlossenstellung entgegen der Federkraft des Federarms ausgelenkt wird. Insbesondere kann der Federarm des Federmittels in der Geschlossenstellung der Klappe weiter entgegen seiner Federkraft ausgelenkt sein als in einer Offenstellung der Klappe.

Grundsätzlich kann das Federmittel innerhalb des Klappengehäuses angeordnet sein. Für einen einfacheren Aufbau der Klappeneinrichtung ist es aber von Vorteil, wenn das Federmittel außerhalb des Klappengehäuses angeordnet ist. Damit das Federmittel mit der Klappenwelle zusammenwirken kann, weist die Klappenwelle dann vorzugsweise einen außerhalb des Klappengehäuses, insbesondere im Lagerbereich, befindlichen Fortsatz auf, mit welchem das Federmittel zumindest in der Geschlossenstellung der Klappe form- und/oder kraftschlüssig in Eingriff gelangt.

Der Fortsatz kann einstückig mit der Klappenwelle ausgebildet sein. Alternativ kann der Fortsatz auch ein zu der Klappenwelle separates Bauteil sein, welches an der Klappenwelle befestigt ist.

Eine besonders einfache und kostengünstige Bauweise der Klappeneinrichtung lässt sich dadurch erreichen, wenn das Federmittel ein separates Bauteil zu einem Lagergehäuse ist, welches ein Lager zur Lagerung der Klappenwelle aufnimmt. Zur Befestigung des Federmittels an dem Lagergehäuse kann das Federmittel an dem Lagergehäuse form- und/oder kraftschlüssig angebracht, insbesondere festgeklemmt, sein. Dabei kann ein Federarm des Federmittels in eine Aussparung des Lagergehäuses eingreifen. Bei der Aussparung kann es sich um eine Nut handeln, in welche das Federmittel eingelegt oder eingeklemmt ist. Überdies kann die Aussparung eine das Lagergehäuse durchdringende Bohrung sein, durch welche das Federmittel hindurchgesteckt ist.

Das Federmittel kann aber auch hülsenartig ausgebildet sein und auf das Lagergehäuse aufgesetzt sein. Dabei umgibt das Federmittel vorzugsweise das Lagergehäuse zumindest abschnittsweise form- und/oder kraftschlüssig. Insbesondere kann das Federmittel das Lagergehäuse in Bezug auf die Wellenachse der Klappenwelle zumindest abschnittsweise radial umgeben. Vorzugsweise weist das Federmittel einen Grundkörper auf, aus welchem der Federarm hervorgeht. Der Grundkörper kann teilringförmig oder ringförmig ausgebildet sein und das Lagergehäuse zumindest abschnittsweise umgeben. An dieser Stelle sei angemerkt, dass das Lagergehäuse beispielsweise in Form einer Lagerbuchse ausgestaltet sein kann.

Der Fortsatz kann verschiedene Formen und Gestaltungen aufweisen. Nach einer vorteilhaften Ausgestaltung der Klappeneinrichtung kann der Fortsatz einen runden, insbesondere kreisrunden, Querschnitt aufweisen, wobei der Fortsatz bezüglich der Drehachse der Klappenwelle exzentrisch ausgerichtet ist und wobei der exzentrische Fortsatz bei einer Verdrehung der Klappe aus der Offenstellung in die Geschlossenstellung spätestens in der Geschlossenstellung auf einen Federarm des Federmittels aufläuft und entgegen dessen Federkraft auslenkt.

Gemäß einer anderen vorteilhaften Ausgestaltung des Fortsatzes definiert dieser eine Längserstreckung und eine quer, insbesondere rechtwinklig, dazu ausgerichtete Kurzerstreckung. Entsprechend kann der Fortsatz mindestens eine Langseite und mindestens eine Kurzseite aufweisen. Insbesondere kann der Fortsatz zwei gegenüberliegende Langseiten und zwei gegenüberliegende Kurzseiten aufweisen.

Gemäß einer vorteilhaften Ausgestaltung des Fortsatzes ist mindestens eine Langseite eben. Hierdurch kann ein Federarm spätestens in der Geschlossenstellung der Klappe besonders gut mit dem Fortsatz form- und/oder kraftschlüssig in Eingriff gelangen, insbesondere wenn der Federarm ebenfalls eben ausgebildet ist. Hierdurch kann eine Schwingungsbewegung der Klappenwelle besonders gut unterbunden oder zumindest gedämpft werden.

Alternativ kann mindestens eine Langseite des Fortsatzes zumindest abschnittsweise, insbesondere in der Mitte der Langseite, in Bezug auf die Drehachse der Klappenwelle radial nach außen gewölbt sein. Sind beide Langseiten des Fortsatzes gewölbt, so können die die Langseiten verbindenden Kurzseiten stärker gekrümmt sein als die Langseiten. Sind alle Seiten des Fortsatzes gekrümmt, so weist der Fortsatz in Bezug auf die Drehachse der Klappenwelle einen ovalen, insbesondere einen elliptischen, Querschnitt auf. Durch die gewölbten Seiten des Fortsatzes wird ein graduelles Auslenken eines Federarms mit zunehmender Vorspannung des Federarms bewirkt.

Es ist aber auch denkbar, dass mindestens eine Langseite des Fortsatzes nicht vollständig sondern nur abschnittsweise radial nach außen gewölbt ist. Bevorzugt ist ein Zwischenabschnitt der mindestens einen Langseite in Bezug auf die Drehachse der Klappenwelle radial nach außen gewölbt, wohingegen die den Zwischenabschnitt in Richtung der Längserstreckung des Fortsatzes umgebenden Flügelabschnitte eben ausgebildet sein können. Vorzugsweise kann bei einer derartigen nicht erfindungsgemäßen Ausgestaltung an der Langseite des Fortsatzes ein Federarm des Federmittels bereits in der Offenstellung der Klappe an dem gewölbten Zwischenabschnitt vorgespannt anliegen bzw. mit dem gewölbten Zwischenabschnitt kraftschlüssig in Eingriff stehen, wodurch die Klappenwelle bereits in der Offenstellung ausreichend gegen eine Schwingungsbewegung der Klappe und der Klappenwelle gesichert ist. In der Geschlossenstellung der Klappe drückt der Federarm dahingegen, insbesondere mit einer Stirnfläche, gegen einen ebenen Flügelabschnitt und sichert so die Klappe und die Klappenwelle gegen eine unerwünschte Schwingungsbewegung.

Eine schwingungsinduzierte Geräuschentwicklung der Klappeneinrichtung lässt sich vorzugsweise auch dadurch effizient unterbinden, dass sich mindestens ein Federarm des Federmittels zumindest in der Geschlossenstellung an einer Langseite des Fortsatzes abstützt und stärker vorgespannt ist als in der Offenstellung, wobei die Längserstreckung des Federarms in der Geschlossenstellung zumindest annähernd parallel zur Längsachse des Fortsatzes ausgerichtet ist. In der Offenstellung kann der Federarm dahingegen zumindest annähernd rechtwinklig zur Längsachse bzw. zu einer Langseite des Fortsatzes ausgerichtet sein.

Denselben Effekt erzielend kann sich gemäß einer alternativen vorteilhaften Ausgestaltung der Klappeneinrichtung mindestens ein Federarm zumindest in der Geschlossenstellung an einer Langseite des Fortsatzes abstützen und stärker vorgespannt sein als in der Offenstellung, wobei die Längserstreckung des Federarms in der Offenstellung zumindest annähernd parallel zur Längsachse des Fortsatzes ausgerichtet ist.

Unter einer im Vergleich zur Offenstellung in der Geschlossenstellung stärkeren Vorspannung des Federarms ist auch zu verstehen, dass der Federarm in der Offenstellung gar nicht vorgespannt ist, d.h., dass sich der Federarm in der Offenstellung nicht in Eingriff mit dem Fortsatz befindet oder nur an diesem anliegt, ohne vorgespannt zu sein.

Befindet sich das Federmittel mit der Klappenwelle in Eingriff, lässt sich eine gleichmäßige Belastung der Klappenwelle erreichen, wenn das Federmittel mindestens zwei Federarme aufweist, die bezüglich der Drehachse der Klappenwelle achssymmetrisch ausgerichtet sind. In vergleichbarer Weise lässt sich eine gleichmäßige Belastung der Klappenwelle erreichen, wenn mindestens zwei Federarme spiegelsymmetrisch zu einer die Drehachse der Klappenwelle enthaltenden Mittelebene ausgerichtet sind. Dabei drücken die zwei Federarme zumindest in der Geschlossenstellung mit einer zumindest annähernd gleich großen Kraft gegen den Fortsatz, sofern die jeweilige Federkraft eines jeden Federarms zumindest annähernd gleich groß ist.

Das Federmittel kann durch Verbiegen eines elastischen Materials hergestellt sein. Insbesondere kann das Federmittel aus einem Federstahl bestehen. Es ist aber auch denkbar, dass das Federmittel aus einem anderen elastischen Material gefertigt ist. Beispielsweise kann das Federmittel auch aus Gummi oder einem elastischen Kunststoff bestehen.

In einer nicht erfindungsgemäßen Ausgestaltung der Klappeneinrichtung ist das Federmittel splintförmig gebogen, wobei zwei Federarme von einem die Federarme verbindenden Verbindungsabschnitt wegweisen. Gemäß einer anderen nicht erfindungsgemäßen Ausgestaltung der Klappeneinrichtung kann das Federmittel auch herzförmig gebogen sein, wobei zwei Federarme mit ihren Enden zu einem die Federarme verbindenden Verbindungsabschnitt hinweisen. Eine weitere vorteilhafte Ausgestaltung der Klappeneinrichtung sieht vor, dass das Federmittel sigmoidalartig gebogen sein kann, wobei zwei Federarme mit ihren Enden zumindest annähernd rechtwinklig zu einem die Federarme verbindenden Verbindungsabschnitt ausgerichtet sind.

Der Verbindungsabschnitt kann nicht nur dazu ausgebildet sein, zwei Federarme miteinander zu verbinden, sondern kann auch dazu dienen, das Federmittel an einem Lagergehäuse festzuklemmen. Insbesondere kann der Verbindungsabschnitt in einer Nut des Lagergehäuses festgeklemmt sein, und die Federarme können jeweils durch eine in dem Lagergehäuse vorgesehene Bohrung, vorzugsweise beweglich, hindurchgesteckt sein.

Gemäß einer nicht erfindungsgemäßen Ausgestaltung der Klappeneinrichtung definieren die Federarme jeweils eine Längserstreckung, wobei die Federarme in einer ersten Phase, insbesondere Anfangsphase, der Verdrehung der Klappe aus der Offenstellung in ihre Geschlossenstellung jeweils zumindest annähernd rechtwinklig zu ihrer jeweiligen Längserstreckung entgegen einer ersten Federkraft und in einer zweiten Phase, insbesondere Endphase, der Verdrehung der Klappe aus der Offenstellung in ihre Geschlossenstellung jeweils zumindest annähernd in ihrer jeweiligen Längserstreckung entgegen einer zweiten Federkraft ausgelenkt sind. Mit anderen Worten sind die Federarme in der vollständig geöffneten Offenstellung der Klappe in Bezug auf die Drehachse der Klappenwelle radial ausgelenkt und in der Geschlossenstellung der Klappe in Bezug auf die Drehachse der Klappenwelle tangential ausgelenkt. Hierbei kann die zweite Federkraft größer sein als die erste Federkraft, so dass eine Geräuschentwicklung der Klappeneinrichtung insbesondere in der Geschlossenstellung der Klappe effektiv unterbunden ist.

Damit der Federarm in Richtung seiner Längserstreckung entgegen einer zweiten Federkraft auslenkbar ist, geht der mindestens eine Federarm vorteilhafterweise in einen federnden Bogenabschnitt über, entgegen dessen Federkraft der Federarm spätestens in der zweiten Phase der Verdrehung der Klappe ausgelenkt wird. Vorzugsweise ist der Bogenabschnitt in einer Ebene gebogen, welche zumindest annähernd senkrecht zur Drehachse der Klappenwelle ausgerichtet ist. Der Bogenabschnitt kann aber auch in einer Ebene gebogen sein, welche quer, insbesondere parallel, zur Drehachse der Klappenwelle ausgerichtet ist.

Nachfolgend wird die Erfindung rein beispielhaft anhand vorteilhafter Ausführungsformen unter Bezugnahme auf die beigefügten Zeichnungen beschrieben. Es zeigen:
- Fig. 1: eine Teilschnittansicht einer Klappeneinrichtung gemäß einer ersten Ausführungsform mit geöffneter Klappe;
- Fig. 2: eine perspektivische Teilansicht der Klappeneinrichtung von Fig. 1;
- Fig. 3: eine perspektivische Teilansicht einer Klappeneinrichtung gemäß einer zweiten Ausführungsform mit geöffneter Klappe;
- Fig. 4: eine Draufsicht auf einen Teil der Klappeneinrichtung von Fig. 3;
- Fig. 5: eine Ansicht entsprechend Fig. 4 einer nicht erfindungsgemäßen dritten Ausführungsform mit geöffneter Klappe;
- Fig. 6: die Ansicht von Fig. 5 mit geschlossener Klappe;
- Fig. 7: eine Ansicht gemäß Fig. 4 einer nicht erfindungsgemäßen vierten Ausführungsform mit geöffneter Klappe;
- Fig. 8: eine perspektivische Teilansicht einer Klappeneinrichtung gemäß einer nicht erfindungsgemäßen fünften Ausführungsansicht mit geöffneter Klappe;
- Fig. 9: eine Ansicht gemäß Fig. 4 einer nicht erfindungsgemäßen sechsten Ausführungsform mit geöffneter Klappe;
- Fig. 10: die Ansicht von Fig. 9 mit der Klappe in einer Zwischenstellung;
- Fig. 11: die Ansicht von Fig. 9 mit geschlossener Klappe;
- Fig. 12: eine perspektivische Teilansicht einer Klappeneinrichtung gemäß einer siebten Ausführungsform mit offener Klappe;
- Fig. 13: eine Draufsicht auf einen Teil der Klappeneinrichtung von Fig. 12 mit der Klappe in einer Zwischenstellung.

Die Figuren zeigen verschiedene Ausführungsformen einer Klappeneinrichtung zur Steuerung eines Gasstroms durch eine Rohrleitung mit zumindest einer Klappe 10, die in einem rohrförmigen Klappengehäuse 12 um eine Drehachse A einer Klappenwelle 14 zwischen einer Offenstellung und einer Geschlossenstellung verdrehbar angeordnet ist. Die Klappeneinrichtung wird beispielsweise als Abgasklappeneinrichtung für einen Abgasstrang einer Brennkraftmaschine eines Kraftfahrzeugs verwendet.

Zur Verdrehung der Klappe 10 zwischen der Offenstellung und der Geschlossenstellung ist eine Antriebseinheit 16 vorgesehen, welche beispielsweise in Form eines Elektromotors ausgebildet sein kann.

Allen Ausführungsformen der Klappeneinrichtung ist gemein, dass ein Federmittel 18 vorgesehen ist, welches bei einer Verdrehung der Klappe aus der Offenstellung in die Geschlossenstellung spätestens in der Geschlossenstellung der Klappe 10 die Klappenwelle 14 elastisch belastet, wobei eine Federkraft des Federmittels 18 in Bezug auf die Drehachse A der Klappenwelle 14 tangentialer und/oder in radialer Richtung hin zu der Drehachse A wirkt. Dabei steht das Federmittel 18 mit der Klappenwelle 14 form- und/oder kraftschlüssig in Eingriff.

Überdies ist allen Ausführungsformen der Klappeneinrichtung gemein, dass das Federmittel 18 in einer Offenstellung der Klappe 10 und in einem daran anschließenden ersten Verdrehbereich die Klappenwelle 14 nicht tangential belastet.

Das Federmittel 18 dient dazu, eine möglicherweise während des Betriebs des Kraftfahrzeugs hervorgerufene Schwingungsbewegung der Klappe 10 und der Klappenwelle 14 zu unterdrücken oder zumindest zu dämpfen. Die Schwingungsbewegung der Klappe 10 und der Klappenwelle 14 kann beispielsweise durch während der Fahrt auftretende Vibrationen und von der Brennkraftmaschine verursachte Druckpulsationen des Abgasstroms induziert werden.

Jedes der Federmittel 18 der verschiedenen Ausführungsformen der Klappeneinrichtung weist mindestens einen Federarm 20 auf, welcher bei einer Verdrehung der Klappe 10 aus der Offenstellung in die Geschlossenstellung mit einem an der Klappenwelle 14 ausgebildeten Fortsatz 22 zusammenwirkt und welcher spätestens in der Geschlossenstellung der Klappe 10 von dem Fortsatz 22 entgegen der Federkraft des Federarms 20 ausgelenkt wird.

Der an der Klappenwelle 14 ausgebildete Fortsatz 22 befindet sich außerhalb des Klappengehäuses 12 in einem Lagerbereich eines Lagers 24 zur Lagerung der Klappenwelle 14. Das Federmittel 18 ist dahingegen an einem Lagergehäuse 26 form- und/oder kraftschlüssig angebracht, welches das Lager 24 zu seiner Lagerung aufnimmt. Das Federmittel ist dadurch gegenüber dem Klappengehäuse 12 in Bezug auf die Drehachse A drehfest. Das Lager 24 kann als ein bewegliches Loslager ausgebildet sein, so dass durch die Beweglichkeit des Loslagers eine Wärmeausdehnung der Klappenwelle 14 und der daran vorgesehenen Klappe 10 kompensiert werden kann. Vorzugsweise ist das Lagergehäuse 26 in Form einer Lagerbuchse ausgestaltet.

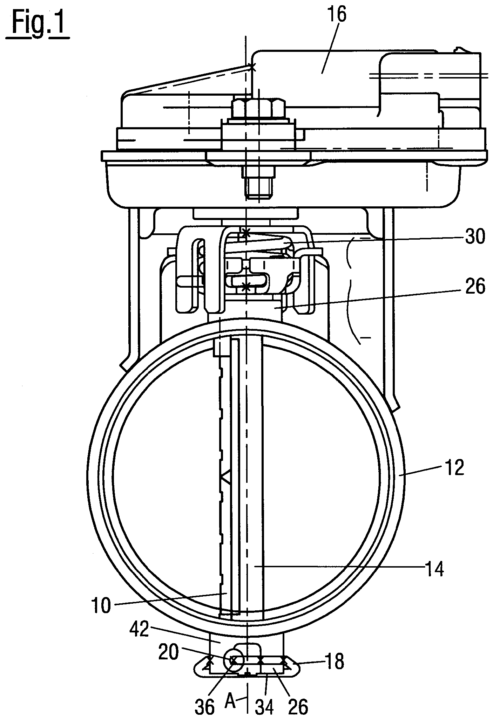

Auf einer vom Lager 24 abgewandten Seite der Klappenwelle 14 kann, wie in Fig. 1 gezeigt, ein weiteres Lager 28 zur Lagerung der Klappenwelle 14 vorgesehen sein. Das weitere Lager 28 kann eine Schraubendruckfeder 30 aufweisen, welche die Klappenwelle 14 in axialer Richtung, d.h. in Richtung parallel zur Drehachse A der Klappenwelle 14 vorspannt. Das weitere Lager 28 kann ebenfalls ein Federmittel 18 wie das Lager 24 umfassen.

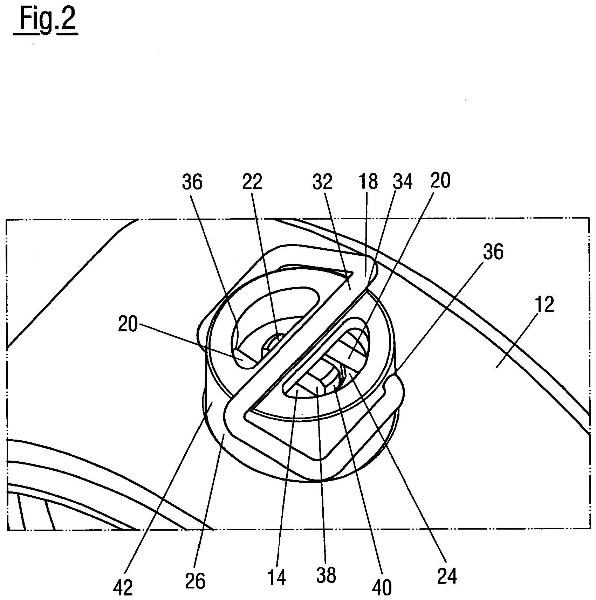

Nun bezugnehmend auf Fig. 1 und 2 wird eine erste Ausführungsform einer Klappeneinrichtung beschrieben. Die Klappeneinrichtung gemäß der ersten Ausführungsform umfasst ein Federmittel 18, welches aus einem drahtförmigen Federstahl hergestellt ist. Das Federmittel 18 ist sigmoidalartig gebogen, so dass zwei Federarme 20 mit ihren Enden zumindest annähernd rechtwinklig zu einem die Federarme 20 verbindenden Verbindungsabschnitt 32 ausgerichtet sind.

Der Verbindungsabschnitt 32 ist in einer Aussparung in Form einer Nut 34 des Lagergehäuses 26 aufgenommen, und die Federarme 20 sind jeweils durch Aussparungen in Form von Bohrungen 36 in dem Lagergehäuse 26 hindurchgesteckt, so dass das Federmittel 18 insgesamt an dem Lagergehäuse 26 festgeklemmt und in Bezug auf die Drehachse A axial vorgespannt ist. Dabei sind die Federarme 20 bezüglich der Drehachse A der Klappenwelle 14 achssymmetrisch ausgerichtet (Fig. 2).

Wie anhand von Fig. 2 zu sehen ist, weist der an der Klappenwelle 14 ausgebildete Fortsatz 22 der Klappeneinrichtung gemäß der ersten Ausführungsform zwei gegenüberliegende ebene Langseiten 38 auf, welche eine rechtwinklig zur Drehachse A der Klappenwelle 14 ausgerichtete Längserstreckung des Fortsatzes 22 definieren. Überdies weist der Fortsatz 22 zwei gegenüberliegende, leicht nach außen gewölbte Kurzseiten 40 auf. In dem in Fig. 2 dargestellten Ausführungsbeispiel sind die Langseiten 38 des Fortsatzes 22 bzw. dessen Längserstreckung außerdem zumindest annähernd rechtwinklig zu einer Klappenebene ausgerichtet, in welcher die Klappe 10 liegt.

Wie außerdem anhand der in Fig. 2 dargestellten Offenstellung der Klappe 10 zu erkennen ist, sind die Federarme 20 in dieser Stellung zumindest annähernd parallel zur Längserstreckung des Fortsatzes 22 ausgerichtet und stützen sich nicht an dem Fortsatz 22 ab. Die Federarme 20 gelangen erst durch eine Verdrehung der Klappe 10 in ihre Geschlossenstellung mit dem Fortsatz 22 in Eingriff, um so eine Schwingungsbewegung der Klappenwelle 14 bzw. der Klappe 10 zu unterbinden oder zumindest zu dämpfen. Dabei stützen sich die Federarme 20 in der Geschlossenstellung der Klappe 10 teilweise bzw. punktuell an den Langseiten 38 des Fortsatzes 22 ab, so dass das Federmittel 18 die Klappenwelle 14 in Bezug auf die Drehachse A achssymmetrisch belastet. Insbesondere stützen sich die Federarme 20 in der Geschlossenstellung der Klappe 10 an diagonal gegenüberliegenden Kanten zwischen den Langseiten 38 und den Kurzseiten 40 des Fortsatzes 22 ab, wodurch die Federarme 20 in der Geschlossenstellung der Klappe 10 ausgelenkt sind. Da die Federarme 20 in der Geschlossenstellung der Klappe 10 ausgelenkt sind, sind die Federarme 20 in der Geschlossenstellung vorgespannt. Dabei wirkt auf die Klappenwelle 14 eine Federkraft des Federmittels 18 in radialer Richtung in Bezug auf die Drehachse A der Klappenwelle 14.

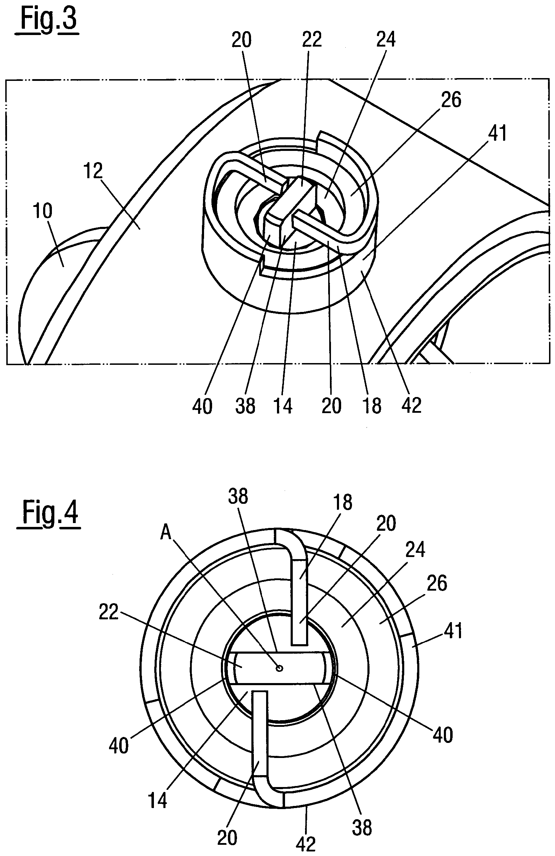

Fig. 3 und 4 zeigen eine zweite Ausführungsform einer Klappeneinrichtung, welche sich von der ersten Ausführungsform darin unterscheidet, dass das Federmittel 18 in Form eines hülsenartigen Stanz-Biege-Teils ausgebildet ist und einen Grundkörper 41 umfasst, welcher das Lagergehäuse 26 ringförmig form- und/oder kraftschlüssig umgibt und aus welchem jeweils zwei Federarme 20 herausgearbeitet sind. Das Federmittel 18 ist demnach auf das Lagergehäuse 26 aufgesetzt. Außerdem unterscheidet sich die Klappeneinrichtung gemäß der zweiten Ausführungsform von der Klappeneinrichtung gemäß der ersten Ausführungsform darin, dass sich in der Geschlossenstellung der Klappe 10 die Federarme 20 jeweils an gegenüberliegenden Langseiten 38 des Fortsatzes 22 abstützen, wodurch die Federarme 20 in der Geschlossenstellung der Klappe 10 ausgelenkt und vorgespannt sind. Mit anderen Worten sind die jeweiligen Längserstreckungen der Federarme 20 in der Offenstellung der Klappe 10 zumindest annähernd rechtwinklig zur Längserstreckung des Fortsatzes 22 ausgerichtet (Fig. 3 und 4), in der Geschlossenstellung dagegen parallel.

Anders als bei der Klappeneinrichtung gemäß der ersten Ausführungsform beaufschlagt das Federmittel 18 die Klappenwelle 14 zusätzlich mit einer in tangentialer Richtung in Bezug auf die Drehachse A der Klappenwelle 14 wirkenden Federkraft, wenn die Klappenwelle 14 und das Federmittel 18 in Eingriff gelangen.

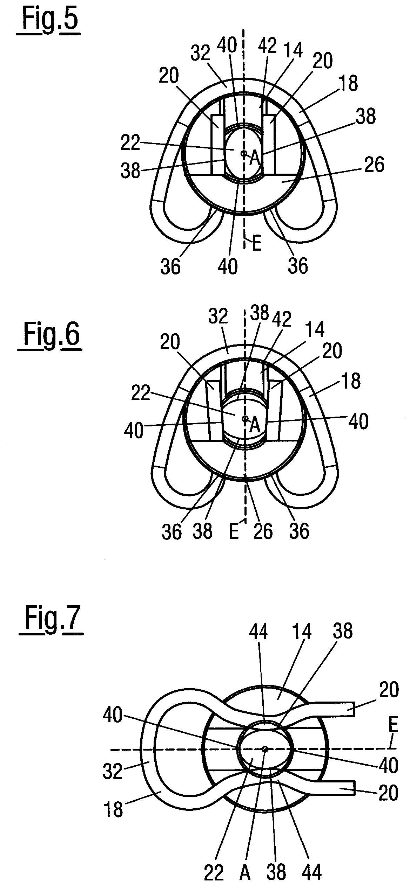

Nun bezugnehmend auf Fig. 5 und 6 wird eine nicht erfindungsgemäße dritte Ausführungsform der Klappeneinrichtung erläutert. Die Klappeneinrichtung gemäß der dritten Ausführungsform umfasst ein Federmittel 18, welches bereits in der Offenstellung der Klappe 10 mit dem Fortsatz 22 der Klappenwelle 14 in Eingriff steht (Fig. 5).

Das Federmittel 18 der Klappeneinrichtung gemäß der dritten Ausführungsform ist aus einem drahtförmigen Federstahl hergestellt und herzförmig gebogen. Dabei ist ein Verbindungsabschnitt 32, welcher zwei Federarme 20 miteinander verbindet, derart gebogen, dass der Verbindungsabschnitt 32 dieselbe bzw. zumindest annähernd die gleiche Krümmung aufweist, wie eine Außenwand 42 eines Lagergehäuses 26 zur Lagerung eines die Klappenwelle 14 lagernden Lagers 24. Hierdurch liegt der Verbindungsabschnitt 32 an der Außenwand 42 des Lagergehäuses 26 an. Die beiden Federarme 20 weisen mit ihren Enden in Richtung des Verbindungsabschnitts 32 und sind durch Bohrungen 36 in dem Lagergehäuse 26 hindurchgesteckt, wodurch das Federmittel 18 an dem Lagergehäuse 26 festgeklemmt ist.

Gleichwohl der Verbindungsabschnitt 32 des Federmittels 18 dieselbe bzw. eine zumindest annähernd gleiche Krümmung aufweist, wie eine Außenwand 42 des Lagergehäuses 26, so ist es von Vorteil, wenn eine Kontaktfläche zwischen dem Verbindungsabschnitt 32 des Federmittels 18 und der Außenwand 42 des Lagergehäuses möglichst gering ist, um eine Wärmeübertragung von dem Lagergehäuse 26 auf das Federmittel 18 möglichst gering zu halten.

Der Fortsatz 22 der Klappeneinrichtung gemäß dieser dritten Ausführungsform weist zwei gegenüberliegende in Bezug auf die Drehachse A der Klappenwelle 14 radial nach außengewölbte Langseiten 38 und zwei gegenüberliegende in Bezug auf die Drehachse A der Klappenwelle 14 radial nach außengewölbte Kurzseiten 40 auf, so dass der Fortsatz 22 einen elliptischen Querschnitt mit einer Langachse und einer Kurzachse aufweist.

Anhand von Fig. 5 ist zu erkennen, dass die jeweiligen Längserstreckungen der Federarme 20 in der Offenstellung der Klappe 10 zumindest annähernd parallel zu der Langachse des Fortsatzes 22 ausgerichtet sind. Überdies sind die beiden Federarme 20 spiegelsymmetrisch zu einer die Drehachse A der Klappenwelle 14 enthaltenden Mittelebene E ausgerichtet, welche in der Offenstellung der Klappe 10 zumindest annähernd parallel zur Längserstreckung des Fortsatzes 22 ausgerichtet ist und welche die Langachse des Fortsatzes 22 aufnimmt (Fig. 5). In der Geschlossenstellung der Klappe 10 ist die Mittelebene E zumindest annähernd parallel zur Kurzachse des Fortsatzes ausgerichtet (Fig. 6).

Wie anhand eines Vergleichs der Fig. 5 und 6 zu erkennen ist, sind die beiden Federarme 20 in der Geschlossenstellung der Klappe 10 (Fig. 6) weiter ausgelenkt und somit stärker vorgespannt als in der Offenstellung der Klappe 10 (Fig. 5). Dabei werden die beiden Federarme 20 in der Geschlossenstellung der Klappe 10 auseinander gespreizt. Das Federmittel 18 belastet die Klappenwelle 14 daher sowohl in der Offenstellung als auch in der Geschlossenstellung der Klappe 10 spiegelsymmetrisch.

Sowohl in der Offenstellung als auch in der Geschlossenstellung der Klappe 10 beaufschlagt das Federmittel 18 die Klappenwelle 14 mit einer in radialer Richtung in Bezug auf die Drehachse A der Klappenwelle 14 wirkenden Federkraft.

Fig. 7 zeigt ein Federmittel 18 und einen Fortsatz 22 einer Klappeneinrichtung gemäß einer nicht erfindungsgemäßen vierten Ausführungsform, welche der Klappeneinrichtung gemäß der dritten Ausführungsform ähnelt. Die Klappeneinrichtung gemäß der vierten Ausführungsform unterscheidet sich von der Klappeneinrichtung gemäß der dritten Ausführungsform insbesondere in der Art, wie das Federmittel 18 gebogen ist.

Das Federmittel 18 der Klappeneinrichtung gemäß der vierten Ausführungsform ist splintförmig gebogen, wobei zwei Federarme 20 von dem Verbindungsabschnitt 32 wegweisen. Außerdem weisen die Federarme 20 jeweils einen in Bezug auf die Drehachse A der Klappenwelle 14 radial nach innen in Richtung des Fortsatzes 22 gebogenen Klemmabschnitt 44 auf, mittels welchem sich die Federarme 20 jeweils an dem Fortsatz 22 bereits in der Offenstellung der Klappe 10 abstützen (Fig. 7).

Durch eine Verdrehung der Klappenwelle 14 aus der Offenstellung der Klappe 10 in die Geschlossenstellung der Klappe 10 werden die beiden Federarme 20 entgegen ihren jeweiligen Federkräften auseinandergespreizt, so dass die Federarme 20 in der Geschlossenstellung der Klappe 10 stärker vorgespannt sind als in der Offenstellung der Klappe 10.

Ebenso wie bei der Klappeneinrichtung gemäß der dritten Ausführungsform wirkt sowohl in der Offenstellung als auch in der Geschlossenstellung der Klappe 10 eine Federkraft des Federmittels 18 in radialer Richtung in Bezug auf die Drehachse A der Klappenwelle 14. Dabei belastet das Federmittel 18 die Klappenwelle in Bezug auf die Drehachse A spiegelsymmetrisch.

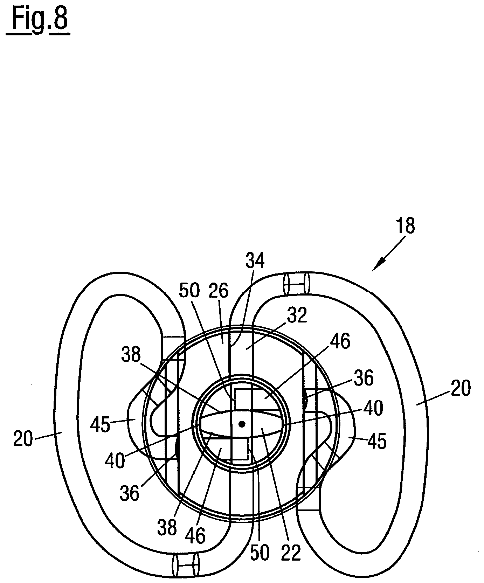

Fig. 8 zeigt eine Klappeneinrichtung gemäß einer nicht erfindungsgemäßen fünften Ausführungsform. Die Klappeneinrichtung gemäß der fünften Ausführungsform unterscheidet sich von der Klappeneinrichtung gemäß der ersten Ausführungsform darin, dass die Federarme 20 bereits in der Offenstellung der Klappe 10 mit dem Fortsatz 22 in Eingriff stehen. Dabei wirkt auf die Klappenwelle 14 in Bezug auf ihre Drehachse A eine Federkraft des Federmittels 18 in radialer Richtung. Außerdem weist der Fortsatz 22 keine ebenen Langseiten 38 sondern nach außen gewölbte Langseiten 38 wie bei der Klappeneinrichtung gemäß der dritten und vierten Ausführungsform der Klappeneinrichtung auf.

Wie überdies anhand von Fig. 8 zu erkennen ist, gehen die durch die Bohrungen 36 des Lagergehäuses 26 hindurchgesteckten Federarme 20 jeweils in einen federnden Bogenabschnitt 45 über.

In der Offenstellung der Klappe 10 und in einer ersten Phase der Verdrehung der Klappe 10 aus der Offenstellung in die Geschlossenstellung (Anfangsphase) sind die jeweiligen Längserstreckungen der Federarme 20 zumindest annähernd parallel zur Langachse des Fortsatzes 22 ausgerichtet, wobei sich die Federarme 20 jeweils mit ihren Längsseiten 46 an den Langseiten 38 des Fortsatzes abstützen. Dabei sind die Federarme 20 zumindest annähernd rechtwinklig zu ihren Längserstreckungen entgegen einer ersten Federkraft in radialer Richtung bezüglich der Drehachse A der Klappenwelle 14 ausgelenkt, so dass das Federmittel 18 die Klappenwelle 14 in Bezug auf die Drehachse A achssymmetrisch belastet.

In der Geschlossenstellung der Klappe 10 und in einer zweiten Phase der Verdrehung der Klappe 10 aus der Offenstellung in die Geschlossenstellung (Endphase) sind die Federarme 20 jeweils in Richtung ihrer Längserstreckungen entgegen der Federkraft des Bogenabschnitts 45 ausgelenkt und erzeugen eine zweite Federkraft in tangentialer Richtung bezüglich der Drehachse A der Klappenwelle 14 ausgelenkt. Dabei stützen sich die Federarme 20 jeweils mit ihren Stirnflächen 50 an den Langseiten 38 des Fortsatzes 22 ab, und die Federarme 20 werden zumindest teilweise aus den Bohrungen 36 herausgedrückt.

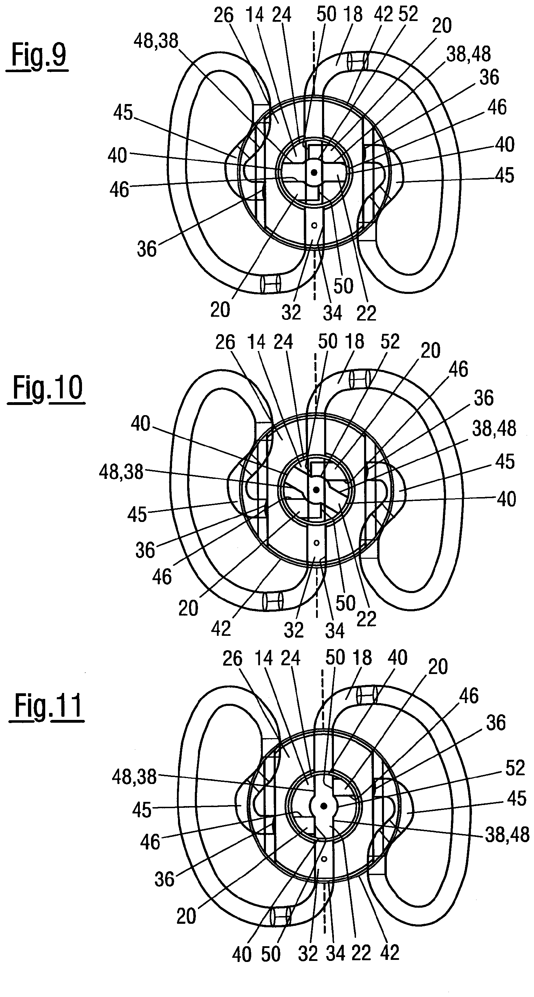

Fig. 9 bis 11 zeigen eine Klappeneinrichtung gemäß einer nicht erfindungsgemäßen sechsten Ausführungsform, welche vom Wirkprinzip ähnlich funktioniert wie die Klappeneinrichtung gemäß der fünften Ausführungsform.

Die Klappeneinrichtung gemäß der sechsten Ausführungsform unterscheidet sich von der Klappeneinrichtung gemäß der fünften Ausführungsform in der Ausgestaltung des Fortsatzes 22. Der Fortsatz 22 der Klappeneinrichtung der sechsten Ausführungsform weist zwei gegenüberliegende Langseiten 38 auf, wobei jede Langseite 38 jeweils zwei ebene Flügelabschnitte 48 aufweist, welche einen radial nach außen gewölbten Zwischenabschnitt 52 in Richtung der Längserstreckung des Fortsatzes 22 umgeben.

Wie anhand der in Fig. 9 dargestellten Offenstellung der Klappe 10 zu erkennen ist, stützen sich die Federarme 20 in der Offenstellung der Klappe 10 jeweils an dem gewölbten Zwischenabschnitt 52 des Fortsatzes 22 ab, wobei die Federarme 20 entgegen ihrer ersten Federkraft in Bezug auf die Drehachse A der Klappenwelle 14 in radialer Richtung ausgelenkt sind. Dabei wirkt auf die Klappenwelle 14 in Bezug auf ihre Drehachse A eine Federkraft des Federmittels 18 in radialer Richtung. Wird die Klappenwelle 14 aus der Offenstellung der Klappe 10 in die Geschlossenstellung der Klappe 10 verdreht, so gelangen die Stirnfläche 50 der Federarme 20 jeweils in Eingriff mit den ebenen Flügelabschnitten 48 des Fortsatzes 22 (Fig. 10), so dass der Fortsatz 22 die Federarme 20 jeweils entgegen der Federkraft des Bogenabschnitts 45 aus dem Lagergehäuse 26 herausdrückt, so dass die Federarme 20 jeweils in Bezug auf die Drehachse A der Klappenwelle 14 eine Federkraft in tangentialer Richtung ausüben.

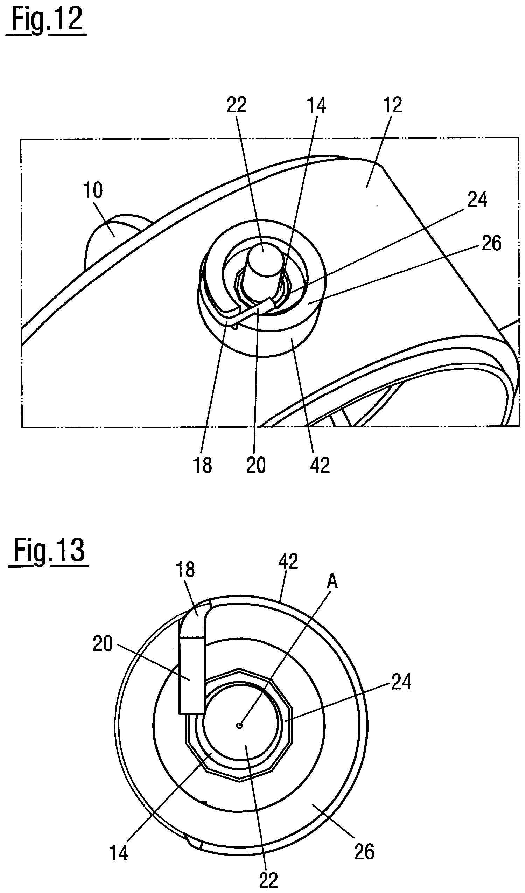

Fig. 12 und 13 zeigen eine siebte Ausführungsform der Klappeneinrichtung. Die Klappeneinrichtung gemäß der siebten Ausführungsform weist lediglich einen Federarm 20 auf, welcher aus einem drahtförmigen Federstahl gebogen und an dem Lagergehäuse 26 festgeklemmt ist. Grundsätzlich kann aber auch mehr als nur ein Federarm 20 vorgesehen sein.

Der Fortsatz 22 der Klappeneinrichtung gemäß der siebten Ausführungsform weist einen kreisrunden Querschnitt auf, wobei der Fortsatz 22 bezüglich der Drehachse A der Klappenwelle 14 exzentrisch ausgerichtet ist. Durch die exzentrische Ausrichtung des Fortsatzes 22 läuft der Fortsatz 22 bei einer Verdrehung der Klappe 10 aus der Offenstellung (Fig. 12) in die Geschlossenstellung auf den Federarm 20 auf und lenkt diesen entgegen seiner Federkraft aus, so dass der Federarm 20 spätestens in der Geschlossenstellung der Klappe 10 vorgespannt ist. Mit anderen Worten drückt der Federarm 20 in der Geschlossenstellung der Klappe 10 gegen die Klappenwelle 14 und verhindert oder zumindest verringert eine Schwingungsbewegung der Klappenwelle 14 bzw. der Klappe 10. Dabei beaufschlagt das Federmittel 18 die Klappenwelle 14 mit einer in Bezug auf die Drehachse A der Klappenwelle 14 in radialer Richtung wirkenden Federkraft.

### Bezugszeichenliste

- 10: Klappe
- 12: Klappengehäuse
- 14: Klappenwelle
- 16: Antriebseinheit
- 18: Federmittel
- 20: Federarm
- 22: Fortsatz
- 24: Lager
- 26: Lagergehäuse
- 28: Lager
- 30: Schraubendruckfeder
- 32: Verbindungsabschnitt
- 34: Nut
- 36: Bohrung
- 38: Langseite
- 40: Kurzseite
- 41: Grundkörper
- 42: Außenwand
- 44: Klemmabschnitt
- 45: Bogenabschnitt
- 46: Längsseite des Federarms
- 48: Flügelabschnitt
- 50: Stirnfläche des Federarms
- 52: Zwischenabschnitt
- A: Drehachse
- E: Mittelebene

## Patentansprüche

1. Klappeneinrichtung zur Steuerung eines Gasstroms durch eine Rohrleitung, insbesondere Abgasklappeneinrichtung für einen Abgasstrang eines Kraftfahrzeugs, mit zumindest einer Klappe (10), die in einem, insbesondere rohrförmigen, Klappengehäuse (12) um eine Drehachse (A) einer Klappenwelle (14) zwischen einer Offenstellung und einer Geschlossenstellung durch eine Antriebseinheit (16) verdrehbar angeordnet ist,
**gekennzeichnet durch**
ein Federmittel (18), welches bei einer Verdrehung der Klappe (10) aus der Offenstellung in die Geschlossenstellung spätestens in der Geschlossenstellung der Klappe (10) die Klappenwelle (14) tangential und/oder radial elastisch belastet, wobei das Federmittel (18) in Bezug auf eine Verdrehung um die Drehachse (1) mit mindestens einem Abschnitt direkt oder indirekt drehfest mit dem Klappengehäuse (12) verbunden ist und wobei das Federmittel (18) in einer Offenstellung der Klappe (10) und in einem daran anschließenden ersten Verdrehbereich die Klappenwelle (14) nicht radial und nicht tangential belastet.

2. Klappeneinrichtung nach Anspruch 1,
**dadurch gekennzeichnet, dass**
das Federmittel (18) die Klappenwelle (14) in tangentialer und/oder radialer Richtung in Bezug auf die Drehachse (A) der Klappenwelle (14) mit seiner Federkraft beaufschlagt.

3. Klappeneinrichtung nach einem der vorstehenden Ansprüche,
**dadurch gekennzeichnet, dass**
das Federmittel (18) die Klappenwelle (14) in Bezug auf die Drehachse (A) achs-, spiegel- oder rotationssymmetrisch belastet.

4. Klappeneinrichtung nach einem der vorstehenden Ansprüche,
dadurch **gekennzeichne**t, dass
das Federmittel (18) in Bezug auf die Drehachse (A) axial vorgespannt ist.

5. Klappeneinrichtung nach einem der vorstehenden Ansprüche,
**dadurch gekennzeichnet, dass**
das Federmittel (18) mindestens einen Federarm (20) aufweist, welcher bei einer Verdrehung der Klappe (10) aus der Offenstellung in die Geschlossenstellung mit der Klappenwelle (14) zusammenwirkt und welcher spätestens in der Geschlossenstellung von der Klappenwelle (14) entgegen der Federkraft des Federarms (20) ausgelenkt wird.

6. Klappeneinrichtung nach einem der vorstehenden Ansprüche,
**dadurch gekennzeichnet, dass**
die Klappenwelle (14) einen außerhalb des Klappengehäuses (12), insbesondere im Lagerbereich, befindlichen Fortsatz (22) aufweist, mit welchem das Federmittel (18) zumindest in der Geschlossenstellung der Klappe (10) form- und/oder kraftschlüssig in Eingriff gelangt.

7. Klappeneinrichtung nach einem der vorstehenden Ansprüche,
**dadurch gekennzeichnet, dass**
das Federmittel (18) an einem Lagergehäuse (26), welches ein Lager (24, 28) zur Lagerung der Klappenwelle (14) aufnimmt, form- und/oder kraftschlüssig angebracht, insbesondere festgeklemmt ist, wobei, bevorzugt, das Federmittel (18) mindestens einen Federarm (20) aufweist, welcher in eine Aussparung (34, 36) in dem Lagergehäuse (26) eingreift, oder wobei, bevorzugt,
das Federmittel (18) hülsenartig ausgebildet ist und auf das Lagergehäuse (26) aufgesetzt ist.

8. Klappeneinrichtung nach Anspruch 6 oder 7,
**dadurch gekennzeichnet, dass**
der Fortsatz (22) einen runden, insbesondere kreisrunden, Querschnitt aufweist, wobei der Fortsatz (22) bezüglich der Drehachse (A) der Klappenwelle (14) exzentrisch ausgerichtet ist und wobei der exzentrische Fortsatz (22) bei einer Verdrehung der Klappe (10) aus der Offenstellung in die Geschlossenstellung spätestens in der Geschlossenstellung auf einen Federarm (20) des Federmittels (18) aufläuft und diesen entgegen dessen Federkraft auslenkt.

9. Klappeneinrichtung nach Anspruch 6 oder 7,
**dadurch gekennzeichnet, dass**
der Fortsatz (22) mindestens eine Langseite (38) und mindestens eine Kurzseite (40) aufweist, wobei- bevorzugt mindestens eine Langseite (38) eben ausgestaltet ist oder zumindest abschnittsweise, insbesondere in der Mitte der Langseite (38), in Bezug auf die Drehachse (A) der Klappenwelle (14) radial nach außen gewölbt ist.

10. Klappeneinrichtung nach Anspruch 9,
**dadurch gekennzeichnet, dass**
zumindest in der Geschlossenstellung mindestens ein Federarm (20) des Federmittels (18) sich an einer Langseite (38) des Fortsatzes (22) abstützt und stärker vorgespannt ist als in der Offenstellung, wobei die Längserstreckung des Federarms (20) in der Geschlossenstellung zumindest annähernd parallel zur Längsachse des Fortsatzes (22) ausgerichtet ist.

11. Klappeneinrichtung nach Anspruch 9,
dadurch **gekennzeichne**t, dass
zumindest in der Geschlossenstellung mindestens ein Federarm (20) des Federmittels (18) sich an einer Langseite (38) des Fortsatzes (22) abstützt und stärker vorgespannt ist als in der Offenstellung, wobei die Längserstreckung des Federarms (20) in der Offenstellung zumindest annähernd parallel zur Längsachse des Fortsatzes (22) ausgerichtet ist.

12. Klappeneinrichtung nach einem der vorstehenden Ansprüche,
**dadurch gekennzeichnet, dass**
das Federmittel (18) mindestens zwei Federarme (20) aufweist,
die bezüglich der Drehachse (A) der Klappenwelle (14) achssymmetrisch ausgerichtet sind oder
die spiegelsymmetrisch zu einer die Drehachse (A) der Klappenwelle (14) enthaltenden Mittelebene (E) ausgerichtet sind.

13. Klappeneinrichtung nach einem der vorstehenden Ansprüche,
**dadurch gekennzeichnet, dass**
das Federmittel (18) aus einem, insbesondere drahtförmigen, Federstahl besteht,
wobei zwei Federarme (20) von einem die Federarme (20) verbindenden Verbindungsabschnitt (32) wegweisen, wobei zwei Federarme (20) mit ihren Enden zu einem die Federarme (20) verbindenden Verbindungsabschnitt (32) hinweisen, oder wobei bevorzugt das Federmittel (18) sigmoidalartig gebogen ist, wobei zwei Federarme (20) mit ihren Enden zumindest annähernd rechtwinklig zu einem die Federarme (20) verbindenden Verbindungsabschnitt (32) ausgerichtet sind, wobei weiter bevorzugt der Verbindungsabschnitt (32) an einem Lagergehäuse (26) festgeklemmt ist, welches ein Lager (24, 28) zur Lagerung der Klappenwelle (14) aufnimmt, und dass die Federarme (20) jeweils durch eine Bohrung (36) in dem Lagergehäuse (26), insbesondere beweglich, hindurchgesteckt sind, wobei noch weiter bevorzugt die Federarme (20) jeweils eine Längserstreckung definieren, wobei die Federarme (20) in einer ersten Phase, der Verdrehung der Klappe (10) aus der Offenstellung in ihre Geschlossenstellung jeweils zumindest annähernd rechtwinklig zu ihrer jeweiligen Längserstreckung entgegen einer ersten Federkraft und in einer zweiten Phase, insbesondere Endphase, der Verdrehung der Klappe (10) jeweils zumindest annähernd in ihrer jeweiligen Längserstreckung entgegen einer zweiten Federkraft ausgelenkt sind, wobei noch weiter bevorzugt mindestens ein Federarm (20) in einen federnden Bogenabschnitt (45), insbesondere in einen in einer Ebene senkrecht zur Drehachse (A) der Klappenwelle (14) gebogenen Bogenabschnitt (45), übergeht, entgegen dessen Federkraft der mindestens eine Federarm (20) spätestens in der zweiten Phase der Verdrehung der Klappe (10) ausgelenkt wird.

## Claims

1. A flap device for controlling a gas flow through a pipe, in particular an exhaust gas flap device for an exhaust train of a motor vehicle, comprising at least one flap (10) which is arranged in a flap housing (12), in particular in a tubular flap housing (12), rotatable by a drive unit (16) about an axis of rotation (A) of a flap shaft (14) between an open position and a closed position,
**characterized by**
a spring means (18) which, on a rotation of the flap (10) from the open position into the closed position, tangentially and/or radially elastically loads the flap shaft (14) at the latest in the closed position of the flap (10), with at least one section of the spring means (18) being directly or indirectly rotationally fixedly connected to the flap housing (12) with respect to a rotation about the axis of rotation (1), and with the spring means (18) not loading the flap shaft (14) radially and not loading the flap shaft (14) tangentially in an open position of the flap (10) and in an adjoining first rotational range.

2. A flap device according to claim 1,
**characterized in that**
a spring force of the spring means (18) is exerted on the flap shaft (14) in a tangential direction and/or in a radial direction with respect to the axis of rotation (A) of the flap shaft (14).

3. A flap device according to one of the preceding claims,
**characterized in that**
the spring means (18) axially symmetrically, mirror-symmetrically or rotationally symmetrically loads the flap shaft (14) with respect to the axis of rotation (A).

4. A flap device according to any one of the preceding claims,
**characterized in that**
the spring means (18) is axially preloaded with respect to the axis of rotation (A).

5. A flap device according to any one of the preceding claims,
**characterized in that**
the spring means (18) has at least one spring arm (20) which cooperates with the flap shaft (14) on a rotation of the flap (10) from the open position into the closed position and which is deflected by the flap shaft (14) against the spring force of the spring arm (20) at the latest in the closed position.

6. A flap device according to any one of the preceding claims,
**characterized in that**
the flap shaft (14) has a prolongation (22) which is located outside the flap housing (12), in particular in a bearing region, and with which the spring means (18) engages in a shape-matched and/or force-transmitting manner at least in the closed position of the flap (10).

7. A flap device according to any one of the preceding claims,
**characterized in that**
the spring means (18) is attached, in particular fixedly clamped, in a shape-matched and/or force transmitting manner to a bearing housing (26) which receives a bearing (24, 28) for supporting the flap shaft (14), with,
preferably, the spring means (18) having at least one spring arm (20) which engages into a recess (34, 36) in the bearing housing (26), or with,
preferably,
the spring means (18) being formed like a sleeve and being placed onto the bearing housing (26).

8. A flap device according to claim 6 or 7,
**characterized in that**
the prolongation (22) has a round cross-section, in particular a circular cross-section, with the prolongation (22) being eccentrically aligned with respect to the axis of rotation (A) of the flap shaft (14), and with the eccentric prolongation (22), on a rotation of the flap (10) from the open position into the closed position, running onto a spring arm (20) of the spring means (18) and deflecting it against its spring force at the latest in the closed position.

9. A flap device according to claim 6 or 7,
**characterized in that**
the prolongation (22) has at least one long side (38) and at least one short side (40), with preferably at least one long side (38) being planar or being at least sectionally, in particular at the center of the long side (38), radially outwardly arched with respect to the axis of rotation (A) of the flap shaft (14).

10. A flap device according to claim 9,
**characterized in that**,
at least in the closed position, at least one spring arm (20) of the spring means (18) is supported at a long side (38) of the prolongation (22) and is preloaded more than in the open position, with the longitudinal extent of the spring arm (20) being aligned at least approximately in parallel with the longitudinal axis of the prolongation (22) in the closed position.

11. A flap device according to claim 9,
**characterized in that**,
at least in the closed position, at least one spring arm (20) of the spring means (18) is supported at a long side (38) of the prolongation (22) and is preloaded more than in the open position, with the longitudinal extent of the spring arm (20) being aligned at least approximately in parallel with the longitudinal axis of the prolongation (22) in the open position.

12. A flap device according to any one of the preceding claims,
**characterized in that**
the spring means (18) has at least two spring arms (20) which are aligned axially symmetrically with respect to the axis of rotation (A) of the flap shaft (14) or
which are aligned mirror-symmetrically with respect to a central plane (E) which includes the axis of rotation (A) of the flap shaft (14).

13. A flap device according to any one of the preceding claims,
**characterized in that**
the spring means (18) consists of a spring steel, in particular a wire-shaped spring steel, with two spring arms (20) facing away from a connection section (32) connecting the spring arms (20), with ends of two spring arms (20) facing toward a connection section (32) connecting the spring arms (20), or with preferably the spring means (18) being curved in a sigmoidal shape, with ends of two spring arms (20) being aligned at least approximately at a right angle to a connection section (32) connecting the spring arms (20), with further preferably the connection section (32) being fixedly clamped to a bearing housing (26) which receives a bearing (24, 28) for supporting the flap shaft (14); and **in that** the spring arms (20) are each inserted, in particular movably inserted, through a bore (36) in the bearing housing (26), with even further preferably the spring arms (20) each defining a longitudinal extent, with the spring arms (20) each being deflected at least approximately at a right angle to their respective longitudinal extent against a first spring force in a first phase of the rotation of the flap (10) from the open position into its closed position and each being deflected at least approximately in their respective longitudinal extent against a second spring force in a second phase, in particular in an end phase, of the rotation of the flap (10), with even further preferably at least one spring arm (20) merging into a resilient arcuate section (45), in particular into an arcuate section (45) curved in a plane perpendicular to the axis of rotation (A) of the flap shaft (14), against whose spring force the at least one spring arm (20) is deflected at the latest in the second phase of the rotation of the flap (10).

## Revendications

1. Dispositif formant clapet pour commander un flux de gaz à travers une conduite tubulaire, en particulier dispositif formant clapet de gaz d'échappement pour une ligne d'échappement d'un véhicule automobile, comprenant au moins un clapet (10) qui est disposé dans un boîtier de clapet (12), en particulier tubulaire, de manière à pouvoir tourner autour d'un axe de rotation (A) d'un arbre de clapet (14) entre une position ouverte et une position fermée, en particulier au moyen d'une unité d'entraînement (16),
**caractérisé par**
un moyen de ressort (18) qui, lors d'une rotation du clapet (10) de la position ouverte à la position fermée, sollicite élastiquement l'arbre de clapet (14) tangentiellement et/ou radialement au plus tard dans la position fermée du clapet (10), sachant que, concernant une rotation autour de l'axe de rotation (1), le moyen de ressort (18) est relié solidairement en rotation au boîtier de clapet (12) directement ou indirectement par une portion, et que, dans une position ouverte du clapet (10) et sur une première plage de rotation qui la suit, le moyen de ressort (18) ne sollicite pas radialement et tangentiellement l'arbre de clapet (14).

2. Dispositif formant clapet selon la revendication 1,
**caractérisé en ce que**
le moyen de ressort (18) sollicite l'arbre de clapet (14) avec sa force élastique dans la direction tangentielle et/ou radiale par rapport à l'axe de rotation (A) de l'arbre de clapet (14).

3. Dispositif formant clapet selon l'une des revendications précédentes,
**caractérisé en ce que**
le moyen de ressort (18) sollicite l'arbre de clapet (14) avec une symétrie axiale, spéculaire ou de révolution par rapport à l'axe de rotation (A).

4. Dispositif formant clapet selon l'une des revendications précédentes,
**caractérisé en ce que**
le moyen de ressort (18) est précontraint axialement par rapport à l'axe de rotation (A).

5. Dispositif formant clapet selon l'une des revendications précédentes,
**caractérisé en ce que**
le moyen de ressort (18) présente au moins un bras de ressort (20) qui coopère avec l'arbre de clapet (14) lors d'une rotation du clapet (10) de la position ouverte à la position fermée et qui est dévié par l'arbre de clapet (14) à l'encontre de la force élastique du bras de ressort (20) au plus tard dans la position fermée.

6. Dispositif formant clapet selon l'une des revendications précédentes,
**caractérisé en ce que**
l'arbre de clapet (14) présente un prolongement (22) situé à l'extérieur du boîtier de clapet (12), en particulier dans la zone de palier, avec lequel le moyen de ressort (18) vient en prise par complémentarité de forme et/ou de force au moins dans la position fermée du clapet (10).

7. Dispositif formant clapet selon l'une des revendications précédentes,
**caractérisé en ce que**
le moyen de ressort (18) est monté, en particulier serré, par complémentarité de forme et/ou par force sur un boîtier de palier (26) qui reçoit un palier (24, 28) de montage de l'arbre de clapet (14), et, de préférence, le moyen de ressort (18) présente au moins un bras de ressort (20) qui s'engage dans un évidement (34, 36) dans le boîtier de palier (26), ou, de préférence, le moyen de ressort (18) est conçu en forme de douille et est placé sur le boîtier de palier (26).

8. Dispositif formant clapet selon la revendication 6 ou 7,
**caractérisé en ce que**
le prolongement (22) présente une section transversale ronde, en particulier circulaire, le prolongement (22) est orienté de manière excentrée par rapport à l'axe de rotation (A) de l'arbre de clapet (14), et, lors d'une rotation du clapet (10) de la position ouverte à la position fermée, le prolongement excentré (22) vient buter sur un bras de ressort (20) du moyen de ressort (18) et le fait dévier à l'encontre de sa force élastique, au plus tard dans la position fermée.

9. Dispositif formant clapet selon la revendication 6 ou 7,
**caractérisé en ce que**
le prolongement (22) présente au moins un côté long (38) et au moins un côté court (40), sachant que, de préférence, au moins un côté long (38) est conçu de manière plane ou est bombé radialement vers l'extérieur par rapport à l'axe de rotation (A) de l'arbre de clapet (14), et ceci au moins localement, en particulier au milieu du côté long (38).

10. Dispositif formant clapet selon la revendication 9,
**caractérisé en ce que**
au moins dans la position fermée, au moins un bras de ressort (20) du moyen de ressort (18) s'appuie sur un côté long (38) du prolongement (22) et est précontraint plus fortement qu'il ne l'est dans la position ouverte, et, dans la position fermée, l'extension longitudinale du bras de ressort (20) est orientée au moins approximativement parallèlement à l'axe longitudinal du prolongement (22).

11. Dispositif formant clapet selon la revendication 9,
**caractérisé en ce que**
au moins dans la position fermée, au moins un bras de ressort (20) du moyen de ressort (18) s'appuie sur un côté long (38) du prolongement (22) et est précontraint plus fortement qu'il ne l'est dans la position ouverte, l'extension longitudinale du bras de ressort (20) dans la position ouverte étant orientée au moins approximativement parallèlement à l'axe longitudinal du prolongement (22).

12. Dispositif formant clapet selon l'une des revendications précédentes,
**caractérisé en ce que**
le moyen de ressort (18) présente au moins deux bras de ressort (20) qui sont orientés à symétrie axiale par rapport à l'axe de rotation (A) de l'arbre de clapet (14), ou qui sont orientés à symétrie spéculaire par rapport à un plan médian (E) contenant l'axe de rotation (A) de l'arbre de clapet (14).

13. Dispositif formant clapet selon l'une des revendications précédentes,
**caractérisé en ce que**
le moyen de ressort (18) est constitué d'un acier à ressort, en particulier en forme de fil, deux bras de ressort (20) sont dirigés en éloignement d'une portion de liaison (32) reliant les bras de ressort (20), deux bras de ressort (20) ont leurs extrémités dirigées vers une portion de liaison (32) reliant les bras de ressort (20), ou, de préférence, le moyen de ressort (18) est courbé en forme de sigmoïde, deux bras de ressort (20) ont leurs extrémités orientées au moins approximativement à angle droit par rapport à une portion de liaison (32) reliant les bras de ressort (20), et, de préférence encore, la portion de liaison (32) est serrée sur un boîtier de palier (26) qui reçoit un palier (24, 28) de montage de l'arbre de clapet (14), et
**en ce que** les bras de ressort (20) sont chacun enfichés, en particulier de manière mobile, à travers un alésage (36) dans le boîtier de palier (26), de préférence encore, les bras de ressort (20) définissent chacun une extension longitudinale, dans une première phase de la rotation du clapet (10) de la position ouverte à sa position fermée, les bras de ressort (20) sont chacun déviés au moins approximativement à angle droit par rapport à leur extension longitudinale respective, à l'encontre d'une première force élastique, et, dans une deuxième phase, en particulier la phase finale, de la rotation du clapet (10), ils sont chacun déviés au moins approximativement dans leur extension longitudinale respective, à l'encontre d'une deuxième force élastique, et, de préférence encore, au moins un bras de ressort (20) se transforme en une portion arquée élastique (45), en particulier en une portion arquée (45) courbée dans un plan perpendiculaire à l'axe de rotation (A) de l'arbre de clapet (14), à l'encontre de la force élastique de laquelle ledit au moins un bras de ressort (20) est dévié au plus tard dans la deuxième phase de la rotation du clapet (10).
